# EUROPEAN PATENT SPECIFICATION

(11) **EP 2 069 672 B1**
(45) Date of publication and mention of the grant of the patent: **12.03.2014**
(21) Application number: 07733561.0
(22) Date of filing: 21.03.2007
(51) Int. Cl.: F16L 15/04, F16L 58/18

(54) **COUPLING ASSEMBLY AND PROTECTIVE RING THEREFOR**
KUPPLUNGSANORDNUNG UND SCHUTZRING DAFÜR
ENSEMBLE D'ACCOUPLEMENT ET ANNEAU DE PROTECTION POUR CELUI-CI

(30) Priority: 27.09.2006 US 528702; 29.09.2006 US 540939
(43) Date of publication of application: 17.06.2009
(60) Divisional application: 10160197.9
(73) Proprietor: National Oilwell Varco, L.P., Houston, TX 77036 (US)
(72) Inventor: MCLAUGHLIN Thomas Kilpatrick, Balmedie Aberdeenshire AB23 8TW (GB)
(74) Representative: Lucas, Phillip Brian
(86) International application number: PCT/GB2007/050136
(87) International publication number: WO 2008/038034

(56) References cited:
- GB-A- 641 125
- GB-A- 2 032 033
- US-A- 1 889 868
- US-A- 2 487 241
- US-A- 2 805 872
- US-A- 4 679 831
- US-A- 4 856 828

## Description

The present invention relates to a protective ring or gasket for use in a coupling assembly, to a coupling assembly comprising the protective ring, and to a method of coupling tubulars together using the coupling assembly.

Many tubulars are used to convey corrosive or erosive materials. Many piping systems and pipelines transport fluids that are highly corrosive to the carbon steel used in the pipe. In the drilling for and the production and injection of oil and gas, corrosion resistant alloy pipe, e.g., casing or tubing, is now used in the drilling of oil and gas wells into zones that produce highly corrosive fluids. To overcome corrosion problems, and as well known to those skilled in the art, it is common to use lined steel pipe, with liners made of plastic, stainless steel, or other corrosion resistant materials.

Certain typical multiple walled pipe, e.g. a lined steel pipe, is a dual or double walled pipe in which the inner wall is a liner tube made of a corrosion resistant material that serves as a conductor for the corrosive fluid, and an outer wall or pipe that is designed to provide strength to withstand the internal pressures of the corrosive fluid, as well as external forces such as external pressure, mechanical loading, etc. In certain tubulars, there are limitations on the length of such double walled pipes due to conditions to which the pipes are subjected on site. Thus, in the case of tubing or casing strings and in the production of oil and gas, each joint of pipe is usually about 7.32-13.41m (24-44 feet) long while the tubing or casing string itself may be thousands of feet long. Accordingly, and as is well known in making up such tubing or casing string, successive joints of tubing/casing are connected together using a coupling (or coupling assembly) until the desired length of string is achieved. Similarly in pipelines successive pieces of pipe are joined by couplings.

Typically, the coupling comprises an annular body for placement between and to which two tubulars may be connected. The annular body has a thread on its interior surface for receiving the thread on the end of the each of the tubulars. An annular gasket is positioned substantially centrally within and co-axial with the annular body. In use, each tubular comes into abutment with one side of the annular gasket as it is screwed into the annular body. An example of such a coupling assembly is shown in US-A-5 470 111.

It is desirable, where successive joints of the lined or clad pipe are joined to one another by means of a coupling that the interior of the coupling is protected from corrosion.

US-A-4,679,831 Kielminski, discloses a floating sealing ring for sealing a gap between pipe ends in a coupling connector. The floating sealing ring comprises a cylindrical steel ring having a recess in each end and coated in a resilient plastics casing on an inner surface and the ends over the recesses. In use, the pipe ends are threaded into the coupling connector and torqued, pressing on the sealing ring pushing the resilient plastics casing located over the ends into the recesses and into recesses located in an inner wall of the coupling connector. It is noted that the resilient plastics casing does not change form on the inner surface of the steel ring to remain flush with the inner diameter of the pipe ends.

According to the present invention there is provided a method of coupling together two tubulars in a coupling assembly wherein a coupling assembly is provided, which comprises a coupling body of generally cylindrical shape with a channel therethrough, each end of the coupling body having a thread for threaded mating with a tubular so that the coupling assembly may provide a connection between two tubulars, wherein a protective ring comprising a ring body of resilient material for positioning adjacent an interior wall of the coupling body between the two ends thereof and located for contact by the two tubulars, the ring body being generally cylindrical and having a ring channel therethrough, the method comprising the steps of threadedly engaging each tubular to the coupling body of the coupling assembly characterised in that the ring body comprises an opening extending from an exterior of the protective ring body to an interior space, wherein an energising member is located within that space, the method further comprising the step of threading the two tubulars into the coupling assembly whereupon the ring body compresses between ends of the two tubulars closing the opening in the ring body about the energizing member urging the ring body against the interior wall of the coupling body.

Preferably, under compression between the two tubulars, the opening begins to close facilitating a change in shape of the ring body without a change in volume thereof. Advantageously, the opening is of sufficient size that, under compression between the two tubulars the ring body is inhibited from significant expansion into a flow path defined by the coupling assembly and the two tubulars

A coupling assembly for use in the method of the present invention the coupling assembly comprising a coupling body of generally cylindrical shape with a channel therethrough, each end of the coupling body having a thread for threaded mating with a tubular so that the coupling assembly may provide a connection between two tubulars, a protective ring comprising a ring body of resilient material for positioning adjacent an interior wall of the coupling body between the two ends thereof and located for contact by the two tubulars, the ring body being generally cylindrical and having a ring channel therethrough, characterised in that the ring body comprises an opening extending from an exterior of the protective ring body to an interior space, wherein an energising member is located within that space, the arrangement being such that, in use, upon compression of the ring body between the two tubulars the opening in the ring body closes about the energizing member to urge the ring body against the interior wall of the coupling body whereby corrosive material is inhibited from contact therewith.

Advantageously, the energizing member extends around the ring body and is substantially co-axial therewith, whereby the ring body is inhibited from bowing inwardly during compression between the two tubulars.

Preferably, the coupling assembly further comprises a plurality of energizing members. Preferably, the coupling assembly further comprises a plurality of openings, each opening corresponding to a respective energizing member, Advantageously, at least one of the plurality of openings is on an exterior of the ring body and at least one of the plurality of openings is on an interior of the ring body.

Preferably, the opening is sized for accommodating manufacturing length tolerances of the two tubulars when the protective ring is compressed therebetween. Advantageously, the ring body comprises a projecting edge adapted to be trapped between the interior wall of the coupling member and a tapered portion of one of the two tubulars. Preferably, the at least one energizing member comprises at least one of: a resilient elastomeric material; and a compressible anti-corrosive material.

The present invention also provides a protective ring of the coupling assembly of the invention. Preferably, in use, upon compression the protective ring, the ring body of the protective ring is forced against the interior wall of the coupling thereby inhibiting corrosive material from contacting the coupling's interior wall or, in the event some corrosive material does enter this area, the protective ring is held against the coupling's interior wall so that the corrosive material, once present, may not exit this area, thus preventing a continuous flow of corrosive material into and out of this area.

For a better understanding of the present invention reference will now be made, by way of example only, to the accompanying drawings, in which:
Fig. 1A is a side cross-section view of a coupling assembly according to the present invention in use with two tubulars;
Figs. 1B and 1C are plan views of the two components of the coupling assembly of Fig. 1A, shown separately for clarity;
Fig. 2A is a side cross-section view of a second coupling assembly in use with two tubulars;
Fig. 2B is a side cross-section view of a coupling body part of the assembly of Fig. 2A;
Fig. 2C is a side cross-section view of a protective ring part of the assembly of Fig. 2A;
Fig. 2D is a side cross-section view of two tubulars prior to coupling with a coupling assembly according to the present invention;
Fig. 2E is a cross-section view of various energizing members;
Fig. 3A is a side cross-section view of part of a first embodiment of a protective ring according to the present invention;
Fig. 3B is a partial side view in cross-section of the protective ring of Fig. 3A in use with a coupling body forming a coupling assembly;
Figs. 3C to 3E show the coupling assembly of Fig. 3B in different stages of compression;
Fig. 4A is a side cross-section view of part of another protective ring;
Fig. 4B is a side cross-section view of part of another protective ring;
Fig. 4C is a side cross-section view of part of another protective ring;
Fig. 4D is a side cross-section view of part of another protective ring;
Fig. 4E is a side cross-section view of part of another protective ring;
Fig. 5A is a side cross-section view of part of another protective ring;
Fig. 5B is a side cross-section view of part of another protective ring;
Fig. 5C is a side cross-section view of part of another protective ring;
Fig. 5D is a side cross-section view of part of another protective ring;
Fig. 6A is a top cross-section view of another protective ring;
Fig. 6B is a side view of the protective ring of Fig. 6A;
Fig. 6C is a top cross-section view of another protective ring;

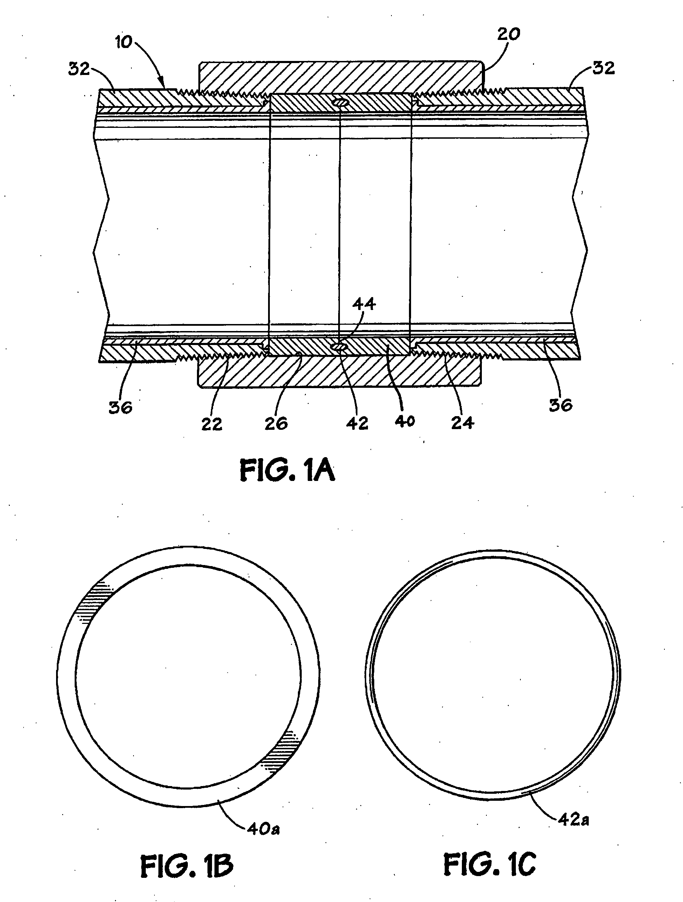

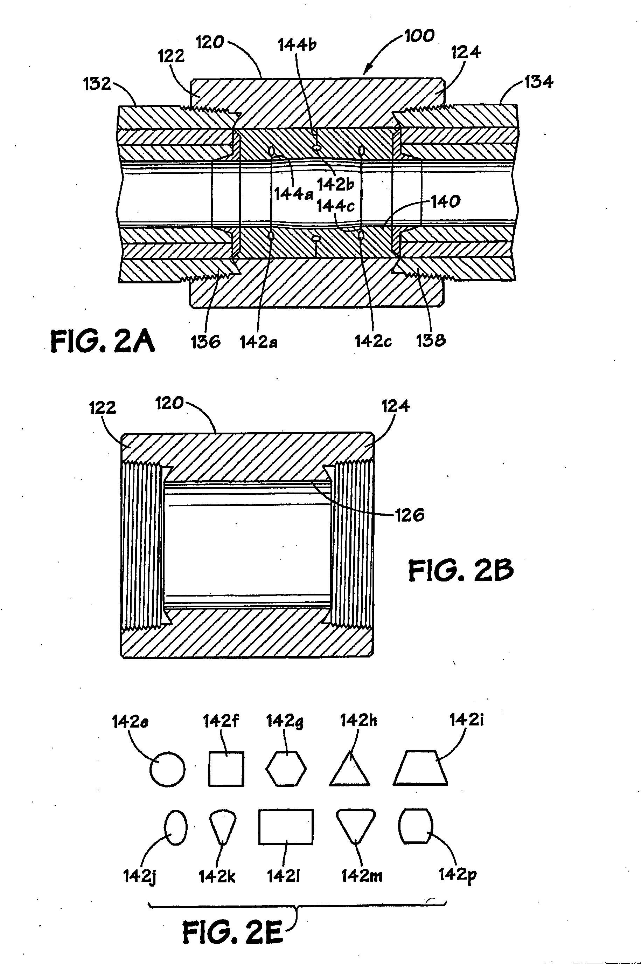

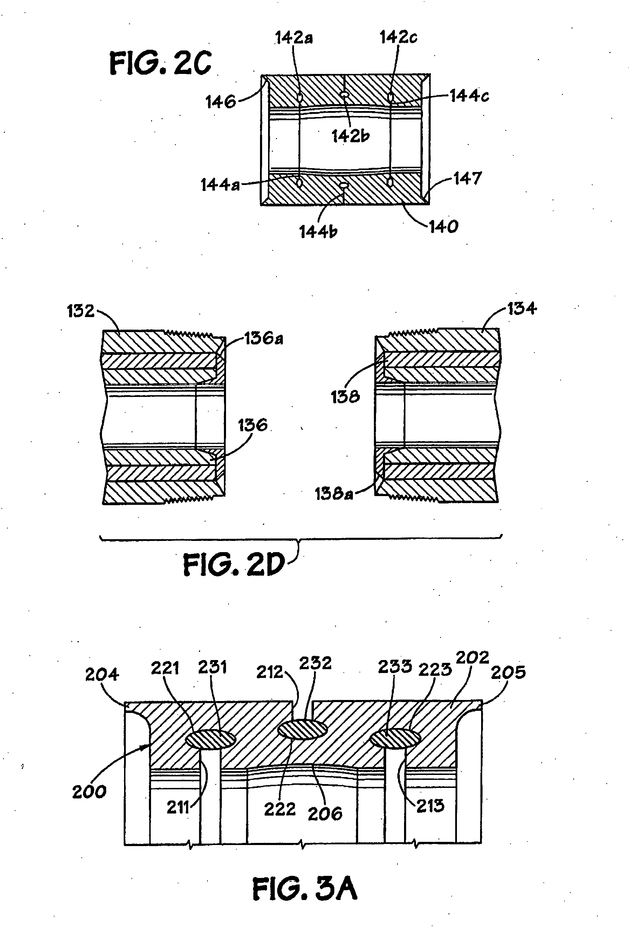

As shown in Fig. 1A, a coupling assembly 10 has a coupling member 20 which is a generally cylindrical hollow member with interiorly threaded spaced-apart ends 22, 24 and an interior wall 26. Two tubulars 32, 34 are threadedly connected to respective ends 22, 24 of the coupling member. Between ends of the two tubulars 32, 34 and adjacent the interior wall 26 of the coupling member 20 is a protective ring 40 (shown schematically) which is any protective ring according to the present invention. Optionally the tubulars 32, 34 have a liner 36 which may be any known tubular liner. optionally, the protective ring 40 has one, two, three, four, five or more (one shown) energizing member 42. Optionally, a recess, slit, or opening 44 (or recesses or openings) (all referred to as "openings") leads from an exterior of the protective ring 40 to the energizing member(s) 42 which allow movement (e.g. axial movement of the protective ring) when compressive forces are applied to the protective ring without a change in volume of the protective ring but with controlled change in shape of the protective ring. Fig. 1B is a top (or bottom) view of one embodiments 40a of a protective ring 40. Fig. 1C is a top (or bottom) view of one embodiment 42a of a protective ring 42. The protective rings and energizing members of Figs. 2A, 2E and 3A are, similarly, items which are generally circular.

As shown in Figs. 2A-2D, a coupling assembly 100 according has a protective ring 140 held in compression between the pin ends 136, 138 of the pipes 132, 134. Each pin end 136, 138 is threadedly secured in a respective end 122, 124 of a coupling member 120. The protective ring 140 has three spaced-apart openings 144a, 144b, and 144c, each of which extends interiorly from an exterior of the protective ring 140 and extends to an interior space which contains an energizing member 142a, 142b, 142c, respectively. Any energizing member in any embodiment of the present invention may have any suitable cross-section shape, including but not limited to, those shown in Fig. 2E (shapes as follows: 142e, circular; 142f, square; 142g, hexagonal; 142h, triangular; 142i, trapezoidal; 142j, oval; 142k, teardrop; 1421, rectangular; 142m, teardrop; 142p, barrel).

Each pin end 136, 138 has an outer end bevel or taper 136a, 138a, respectively. Edge portions 146, 147 of the protective ring 140 are squeezed between an interior wall 126 of the coupling member 120 and the bevelled pin ends, thus assisting in securing the protective ring 140 in place adjacent the interior wall 126 of the coupling member 120.

It is within the scope of the present invention for all energizing members of a protective ring (any disclosed herein) according to the present invention to be of the same or of different hardness. As shown in Fig. 2A, the two energizing members 142a, 142c are of the same hardness and the energizing member 142b is of a material harder than the material of the energizing members 142a, 142c. In one particular aspect, the energizing members 142a, 142c are made of a resilient elastomeric material, e.g., but not limited to, nitrile or butile; in certain aspects the members 142a, 142c with a hardness of about 70 durometer and the member 142b with a hardness of about 90 durometer. Any protective ring according to the present invention may have energizing members located further interiorly than other energizing members and of a hardness less than the other energizing members (e.g. other energizing members at an exterior wall of a protective ring).

In the coupling assembly 100, the protective ring 140 extends around the entire inner circumference of the coupling member 120 and the energizing members 142a, 142b, and 142c (and their corresponding openings 144a, 144b, 144c) extend around (and within) the entire circumference of the protective ring 140.

Fig. 3A shows a protective ring 200 according to the present invention (e.g. usable in the coupling assemblies of Figs. 1A and 2A). In certain particular aspects a body 202 of the protective ring 200 is made of compressible anti-corrosive material, e.g. elastomeric resilient material, polytetrafluoroethylene ("PTFE"), or a combination of elastomer and PTFE. Initially three openings 211, 212, and 213 extend from an exterior of the protective ring 200 to interior spaces 221, 222, 223, respectively, within the protective ring 200. Energizing members 231, 232, 233 are located within the interior spaces 221, 222, 223, respectively.

Optionally, the protective ring 200 has outer edges or "teeth" 204, 205.

The openings 211, 212, 213, the spaces 221, 222, 223 and the energizing members 231, 232, 233 extend around the entire generally cylindrical body 202 (which is like the protective rings 40 and 140 in general hollow cylindrical shape although only part of the protective ring 200 is shown in Fig. 3A). Optionally, the body 202 has a circumferential indentation 206 or concave area therearound.

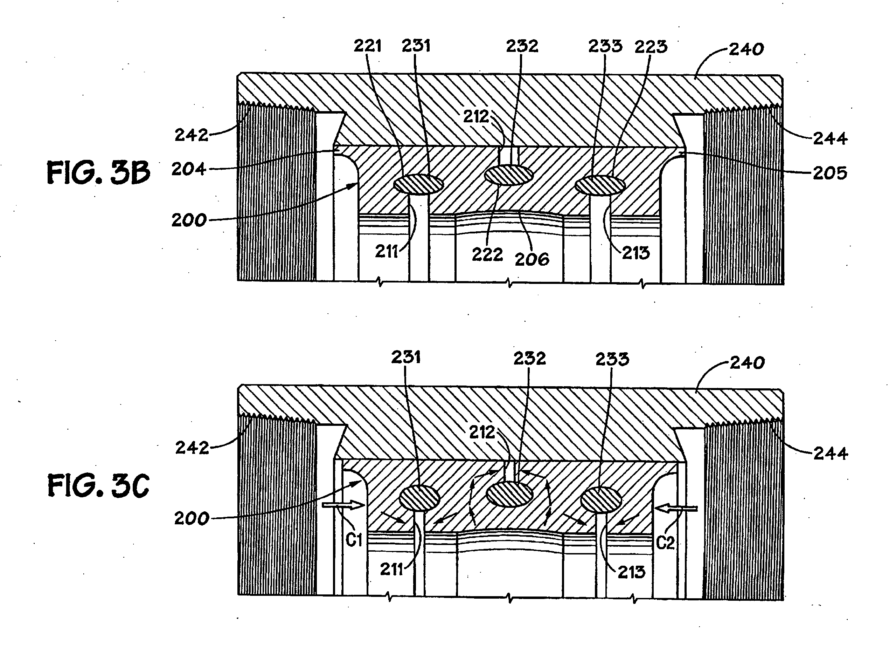

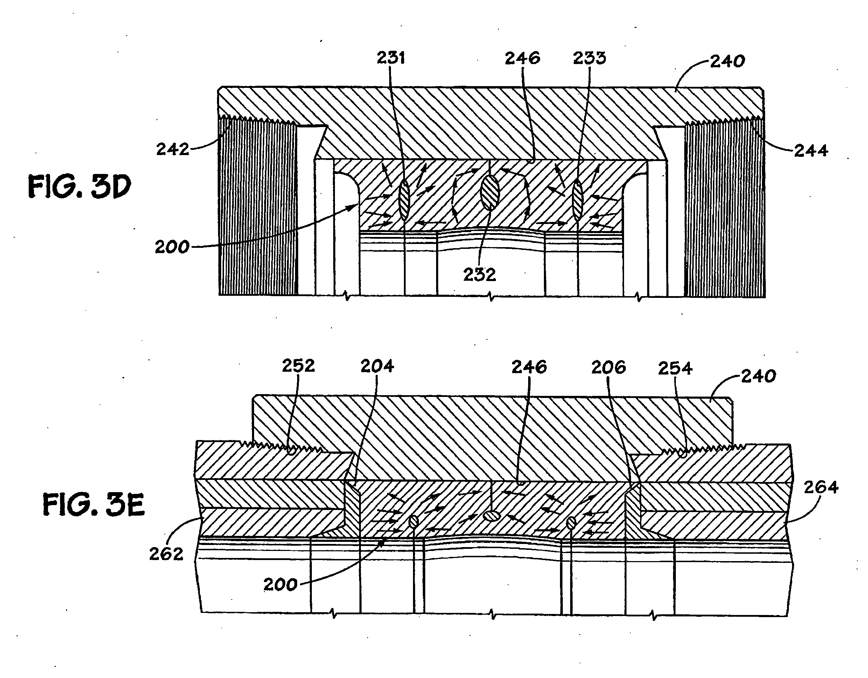

As shown in Fig. 3B, the protective ring 200 is positioned adjacent and installed inside a coupling member 240 (shown partially - shaped generally cylindrically as the coupling members 20 and 120 described above) having internally threaded ends 242, 244 for threadedly mating with externally threaded ends (e.g. the ends 252, 254 of pipes 262, 264, Fig. 3E).

As shown in Fig. 3C the protective ring 200 is being compressed (indicated by arrows C1, C2), e.g. by pin ends of two tubulars to be connected together by the coupling 240. Since energizing members 231 and 233 are not as hard as the energizing member 232, the energizing members 231 and 233 move under compression before the energizing member 232, thus the protective ring 200 begins to move outwardly (toward the coupling member 240 as shown in Fig. 3C). The openings 211 and 213 begin to restrict and close. Then the opening 212 begins to restrict and close. The openings 211 - 213 provide space so that the protective ring 200 does not significantly expand into the flow path of the coupling member 240. The indentation 206 also facilitates the outward movement (toward the coupling member interior wall) of the protective ring 200 and provides an area or a void for protective ring material to flow to when the protective ring is compressing.

Fig. 3D illustrates the protective ring 200 fully compressed with the openings 211 - 213 closed and the energizing members 231 - 233 compressed (the members 231 - 233 have changed shape). The protective ring 200 has been forced against an interior wall 246 of the coupling member and, due to the openings 211 - 213, the indentation 206, and/or the entrapment of the two teeth 204, 205, the protective ring 200 has been biased outwardly and prevented from bowing inwardly so that the protective ring 200 is pressed up against the interior wall 246 along the length of the protective ring 200. The energizing members 231 - 233 are pushing the protective ring 200 against the coupling's interior wall.

As shown in Fig. 3E, the edges or teeth 204, 205 of the protective ring 200 have been trapped between tapered ends of the tubulars 262, 264 and part of the interior wall 246 of the coupling member 240, thus facilitating maintenance of the protective ring 200 in position to protect the interior wall 246.

With no adhesive or material between the interior wall 246 and the protective ring 200, and with the edges 204, 205 entrapped as described, either: corrosive fluid and/or material does not come into contact with the wall 246; or once such fluid and/or material does move between the wall 246 and the exterior of the protective ring 200 it is held there and its escape therefrom is inhibited or prevented. Thus, the wall 246 is exposed only to that amount of the material (and, in certain aspects only to the amount of oxygen in that amount of material) so that other corrosive material is inhibited or prevented from flowing into that space to corrode the wall 246 and so that a continuous flow of corrosive material is inhibited or prevented.

In certain aspects oil country tubular goods are made according to certain length tolerances, e.g. one-eighth inch plus or minus. By approximately sizing the openings (e.g. the openings 211 - 213) of a protective ring according to the present invention, this manufacturing tolerance can be accommodated. For example, for tubulars with a one-eighth inch manufacturing tolerance, if each opening (e.g. 211 - 213) is 0.66 inches for a total of about 0.200 inches (actually 0.198 inches) and the energizing members themselves (e.g. members 231 - 233) can be squeezed a total of another 0.050 inches, a total of about 0.250 inches of compression is available, i.e., an amount equal to about the manufactuprotective ring tolerance of one-eighth inch plus or minus (a total of one-fourth inch).

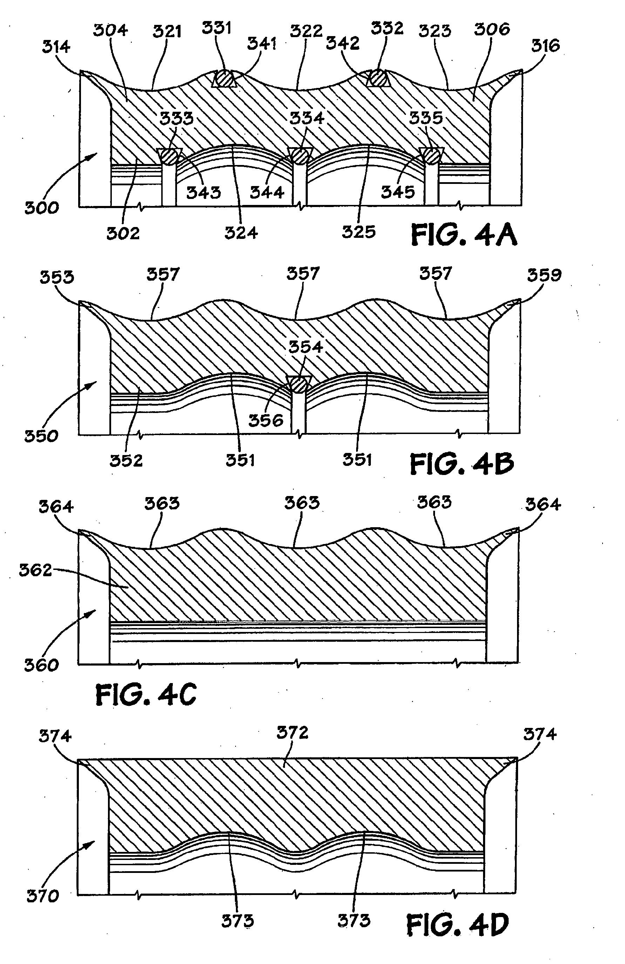

Fig. 4A shows a protective ring 300 useful in protecting a coupling member (e.g. a coupling member as in Figs. 1A, 2A, 3B or 3E). The protective ring 300 (only half is shown) has a body 302 with a first end 304 and a second end 306. Each end, optionally, has a projecting edge or tooth 314, 316, respectively which extends around the entire circumference of its respective circular end. A plurality of concave areas extend around the protective ring's circumference areas 321, 322, 323 on the protective ring's exterior surface and areas 324, 325 on the protective ring's interior surface. Two energizing members 331, 332 or held in corresponding recess 341, 342 on the protective ring's exterior surface and three energizing members 333, 334, 335 are held in corresponding recesses 343, 344, 345 on the protective ring's interior surface.

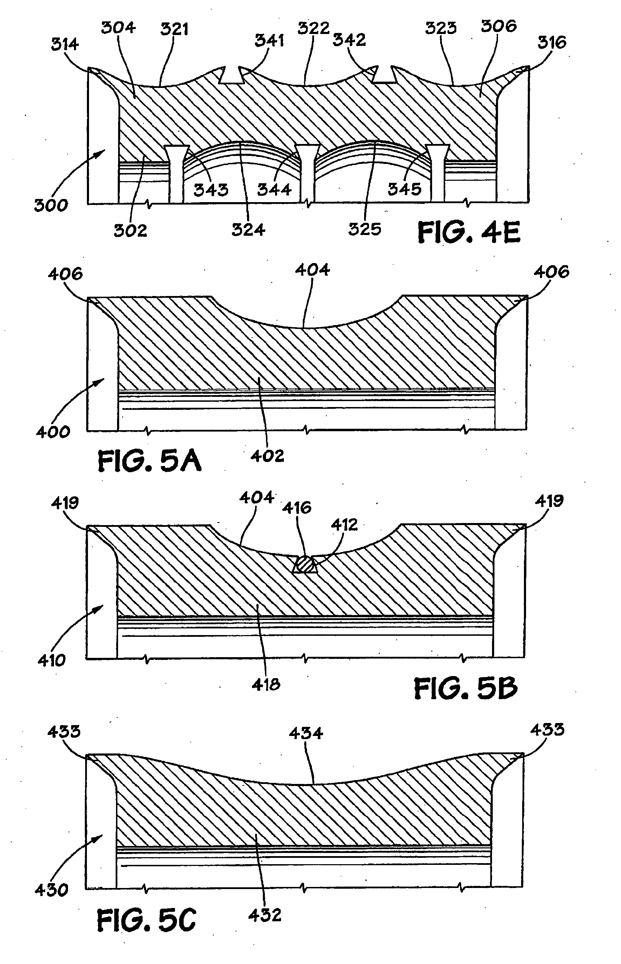

As shown in Fig. 4E, the energizing members are, in one aspect, omitted. Any one, some, or all of the recesses 341 - 345 may be omitted.

The edges or teeth 314, 316 can be trapped as described above for the edges 204, 205.

As shown in Fig. 4A, each energizing member 343, 344, 345 can be located opposite a concave area 321, 322, 323 (along with other forces) respectively, and, upon energizing force the concave areas outwardly.

Fig. 4B illustrates a protective ring 350, like the protective ring 300, but with only one energizing member 354 on an interior surface of a protective ring body 352. The energizing member 354 is in a recess 356 which is positioned between two concave areas 351. These concave areas 351 are on the body's exterior surface and the body 352 has two end edges or teeth 353, 359.

Fig. 4C shows a protective ring 360, like the protective ring 350, but without the concave areas 351. A body 362 has three concave areas 363 on the body's exterior surface. Optionally, there are end edges 364 at ends of the body 362. Optionally, any energizing member or members disclosed herein can be added to the protective ring 360.

Fig. 4D shows a protective ring 370, like the protective ring 350, but without energizing members. A body 372 has two concave areas 373 on the body's interior surface. Optionally, ends of the body 362 have edges 374. Optionally, any energizing member or members disclosed herein can be added to the protective ring 370.

Fig. 5A shows a protective ring 400 which is a generally cylindrical hollow member (only half shown). The protective ring 400 has a body 402 with a concave area 404 on its exterior surface. As with all the concave areas referred to above, the concave area 404 extends around the body of the protective ring. Optionally, as is true of any protective ring according to the present invention, the concave area(s) may be intermittent, a single pocket, or a series of spaced-apart distinct pockets. Ends of the body 402, optionally, have edges 406.

Fig. 5B shows a protective ring 410 which is like the protective ring 410 but which includes a recess 412 with an energizing member 416 therein. The protective ring 410 has a body 418 with a concave area 415 and with optional end edges 419.

Fig. 5C shows a protective ring 430 with a body 432 having optional end edges 433. A concave area 434 is on the body's exterior surface.

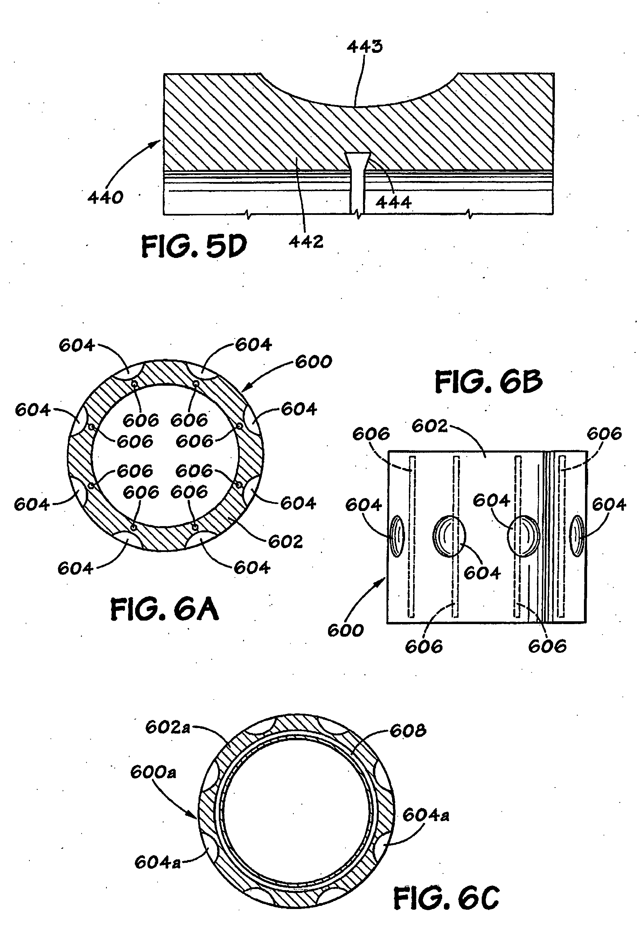

Fig. 5D shows a protective ring 440 with a body 442. The body 442 has a concave area 443 on its exterior and a recess 444 on its interior.

In any embodiment with intermittent concave areas, pocket, or pockets, if an energizing member is used, the energizing member may extend only so far as the area or pocket(s) or it may still extend uninterrupted around the protective ring's circumference.

Fig. 6A illustrates a protective ring 600 with a plurality of spaced-apart concave areas 604 in a body 602. Optionally energizing members 606 are adjacent each pocket. Alternatively, as shown in Fig. 6C, in a protective ring 600a, like the protective ring 600, an energizing member 608 can extend adjacent all pockets 604a in a body 602a.

The protective ring and coupling assembly of the present invention may find application in various fields including, but not limited to, coupling any clad or lined tubulars including oil and gas well tubing and casing, piping in chemical and other plants, oil and gas pipelines, etc.

## Claims

1. A method of coupling together two tubulars in a coupling assembly, wherein a coupling assembly is provided, which comprises a coupling body (240) of generally cylindrical shape with a channel therethrough, each end of the coupling body having a thread (242,244) for threaded mating with a tubular so that the coupling assembly may provide a connection between two tubulars (132,134), therein a protective ring comprising a ring body (200) of resilient material is positioned adjacent an interior wall of said coupling body (240) between the two ends thereof and located for contact by said two tubulars, said ring body (200) being generally cylindrical and having a ring channel therethrough, the method comprising the steps of threadedly engaging each tubular to the coupling body of the coupling assembly **characterised in that** the ring body (200) comprises an opening (211,212,213) extending from an exterior of the ring body (200) to an interior space (221,222,223), wherein an energising member (231,232,233) is located within that space (221,222,223), the method further comprising the step of threading the two tubulars into said coupling assembly whereupon the ring body (200) compresses between ends of said two tubulars closing the opening (211,212,213) in the ring body (200) about the energizing member (231,232,233) urging the ring body (200) against the interior wall of the coupling body (240).

2. A method in accordance with Claim 1 wherein, under compression between said two tubulars, said opening (211,212,213) begins to close facilitating a change in shape of said ring body (200) without a change in volume thereof.

3. A method in accordance with Claim 1 or 2 wherein, said opening (211,212,213) is of sufficient size that, under compression between said two tubulars said ring body is inhibited from significant expansion into a flow path defined by said coupling assembly and said two tubulars.

4. A coupling assembly for use in the method as claimed in any of Claims 1 to 3, the coupling assembly comprising a coupling body (240) of generally cylindrical shape with a channel therethrough, each end of said coupling body having a thread (242,244) for threaded mating with a tubular so that the coupling assembly may provide a connection between two tubulars (132,134), a protective ring comprising a ring body (200) of resilient material for positioning adjacent an interior wall of said coupling body (240) between the two ends thereof and located for contact by said two tubulars, said ring body (200) being generally cylindrical and having a ring channel therethrough, **characterised in that** said ring body (200) comprises an opening (211,212,213) extending from an exterior of the ring body (200) to an interior space (221,222,223), wherein an energising member (231,232,233) is located within that space (221,222,223), the arrangement being such that, in use, upon compression of said ring body (200) between said two tubulars (132,134) the opening (211,212,213) closes about said energizing member to urge said ring body (200) against said interior wall of said coupling body (240) whereby corrosive material is inhabited from contact therewith.

5. A coupling assembly as claimed in claim 4, wherein said energizing member (231,232,233) extends around said ring body (200) and is substantially co-axial therewith, whereby said ring body (200) is inhibited from bowing inwardly during compression between said two tubulars.

6. A coupling assembly as claimed in claim 4 or 5, further comprising a plurality of energizing members (231,232,233).

7. A coupling assembly as claimed in claim 4, 5 or 6, further comprising a plurality of openings (211,212,213), each opening corresponding to a respective energizing member (231,232,233),

8. A coupling assembly as claimed in Claim 7, wherein at least one of said plurality of openings (211,212,213) is on an exterior of said ring body and at least one of said plurality of openings (211,212,213) is on an interior of said ring body (200).

9. A coupling assembly as claimed in any of Claims 4 to 8, wherein said opening (211,212,213) is sized for accommodating manufacturing length tolerances of said two tubulars when said protective ring is compressed therebetween.

10. A coupling assembly as claimed in any of Claims 4 to 9, wherein said ring body (200) comprises a projecting edge adapted to be trapped between said interior wall of said coupling member and a tapered portion of one of said two tubulars.

11. A coupling assembly as claimed in any of claims 4 to 10, wherein the at least one energizing member (231,232,233) comprises at least one of: a resilient elastomeric material; and a compressible anti-corrosive material.

12. A coupling assembly as claimed in any of Claims 4 to 11, wherein the protective ring comprises at least one concave area (206) extending around at least a part of the circumference of said ring body (200).

13. A protective ring for the coupling assembly as claimed in any of Claims 4 to 14, the protective ring comprising a ring body (200) for positioning adjacent an interior wall of a coupling body (240) of resilient material between the two ends thereof and located for contact by two tubulars, said ring body (200) being generally cylindrical and having a ring channel therethrough,
**characterised in that** said ring body (200) comprises an opening (211,212,213) extending from an exterior of the ring body (200) to an interior space (221,222,223), wherein an energising member (231,232,233) is located within that space (221,222,223), the arrangement being such that, upon compression of the protective ring between said two tubulars the opening (211,212,213) closes about the energising member (231,232,233) urging the ring body (200) against the interior wall of the coupling body (240).

## Patentansprüche

1. Ein Verfahren zum Zusammenkuppeln zweier Schläuche in einer Kupplungseinrichtung, worin eine Kupplungseinrichtung bereitgestellt wird, welche einen Kupplungskörper (240) von im Allgemeinen zylindrischer Form mit einem Kanal durch diesen umfasst, wobei jedes Ende des Kupplungskörpers ein Gewinde (240,244) für eine Gewindeverbindung mit einem Schlauch hat, so dass die Kupplungseinrichtung eine Verbindung zwischen zwei Schläuchen (132,134) bereitstellen kann, worin ein Schutzring, der einen Ringkörper (200) aus einem nachgiebigen Material umfasst, anliegend an die innere Wand des Kupplungskörpers (240) zwischen dessen zwei Enden angeordnet wird und so platziert wird, dass er Kontakt mit beiden Schläuchen hat, wobei der Ringkörper (200) im Allgemeinen zylindrisch ist und einen Ringkanal durch sich hat, wobei das Verfahren die Schritte des Gewindeverbindens jeden der Schläuche mit dem Kupplungskörper der Kupplungseinrichtung umfasst, **dadurch gekennzeichnet, dass** der Ringkörper (200) eine Öffnung (211,212,213) umfasst, welche sich von einer Außenseite des Ringkörpers (200) zu einem Innenraum (221,222,223) erstreckt, worin ein antreibendes Teil (231,232,233) in diesem Raum (221,222,223) platziert ist, und wobei das Verfahren weiterhin den Schritt des Einfädelns der zwei Schläuche in die Kupplungseinrichtung umfasst, woraufhin der Ringkörper (200) zwischen den zwei Enden der Schläuche zusammengepresst wird, wobei die Öffnung (211,212,213) in dem Ringkörper (200) über dem antreibenden Teil (231,232,233) geschlossen wird und den Ringkörper (200) gegen die innere Wand des Kupplungskörpers (24) zwingt.

2. Verfahren nach Anspruch 1, worin unter Kompression zwischen den zwei Schläuchen die Öffnung (211,212,213) sich zu schließen beginnt, wobei eine Formveränderung des Ringkörpers (200) ohne eine Volumenänderung vereinfacht wird.

3. Verfahren gemäß Anspruch 1 oder 2. worin die Öffnung (211,212,213) eine ausreichende Größe besitzt, so dass unter Kompression zwischen den zwei Schläuchen der Ringkörper an einer signifikanten Erweiterung in einen Flussweg, der von der Kupplungseinrichtung und den zwei Schläuchen definiert wird, gehindert wird.

4. Eine Kupplungseinrichtung für die Verwendung in dem Verfahren gemäß einem der vorangehenden Ansprüche 1 bis 3, wobei die Kupplungseinrichtung einen Kupplungskörper (240) von im Allgemeinen zylindrischer Form mit einem Kanal durch diesen umfasst, wobei jedes Ende des Kupplungskörpers ein Gewinde (240,244) für eine Gewindeverbindung mit einem Schlauch hat, so dass die Kupplungseinrichtung eine Verbindung zwischen zwei Schläuchen (132,134) bereitstellen kann, worin ein Schutzring, der einen Ringkörper (200) aus einem nachgiebigen Material umfasst, anliegend an die innere Wand des Kupplungskörpers (240) zwischen dessen zwei Enden angeordnet wird und so platziert wird, dass er Kontakt mit beiden Schläuchen hat, wobei der Ringkörper (200) im Allgemeinen zylindrisch ist und einen Ringkanal durch sich hat, **dadurch gekennzeichnet, dass** der Ringkörper (200) eine Öffnung (211,212,213) umfasst, welche sich von einer Außenseite des Ringkörpers (200) zu einem Innenraum (221,222,223) erstreckt, worin ein antreibendes Teil (231,232,233) in diesem Raum (221,222,223) platziert ist, und wobei die Zusammenstellung so ist, dass im Einsatz bei Kompression des Ringkörpers (200) zwischen den zwei Schläuchen (132,134) die Öffnung (211,212,213) über den antreibenden Teilen schließt , um den Ringkörper (200) gegen die innere Wand des Kupplungskörpers (240) zu zwingen, wobei korrosives Material daran gehindert wird, Kontakt damit einzugehen.

5. Eine Kupplungseinrichtung gemäß Anspruch 4, worin das antreibende Teil (231,232,233) sich um den Ringkörper (200) erstreckt und im Wesentlichen koaxial damit ist, wobei der Ringkörper (200) daran gehindert wird, sich während der Kompression zwischen zwei Schläuchen nach innen zu biegen.

6. Eine Kupplungseinrichtung gemäß der Ansprüche 4 oder 5, welche weiter eine Vielzahl von antreibenden Teilen (231,232,233) enthält.

7. Eine Kupplungseinrichtung gemäß der Ansprüche 4, 5 oder 6, welche weiter eine Vielzahl von Öffnungen (211,212,213) enthält, wobei jede Öffnung einen bestimmten antreibenden Teil (231,232,233) betrifft.

8. Eine Kupplungseinrichtung gemäß Anspruch 7, worin wenigstens eine aus der Vielzahl an Öffnungen (211,212,213) an der Außenseite des Ringkörpers und wenigstens eine aus der Vielzahl der Öffnungen (211,212,213) an der Innenseite des Ringkörpers (200) ist.

9. Eine Kupplungseinrichtung gemäß einem der Ansprüche 4 bis 8, worin die Öffnung (211,212,213) abgemessen ist, um Längentoleranzen in der Herstellung der zwei Schläuche auszugleichen, wenn der Schutzring zwischen ihnen zusammengepresst wird.

10. Eine Kupplungseinrichtung gemäß einem der Ansprüche 4 bis 9, worin der Ringkörper (200) eine vorstehende Kante umfasst, welche angepasst wurde, um zwischen der inneren Wand des Kupplungsteils und einem angewinkelten Teil eines der beiden Schläuche eingeschlossen zu werden.

11. Eine Kupplungseinrichtung gemäß einem der Ansprüche 4 bis 10, worin der mindestens eine antreibende Teil (231,232,233) wenigstens eines davon umfasst: ein nachgiebiges, elastomerisches Material; und eine komprimierbares, antikorrosives Material.

12. Eine Kupplungseinrichtung gemäß einem der Ansprüche 4 bis 11, worin der Schutzring wenigstens einen konkaven Bereich (206) um wenigstens einen Teil des Umfangs des Ringkörpers (200) umfasst.

13. Ein Schutzring für eine Kupplungseinrichtung gemäß einem der Ansprüche 4 bis 14, wobei der Schutzring einen Ringkörper (200) aus einem nachgiebigen Material umfasst, anliegend an die innere Wand des Kupplungskörpers (240) zwischen dessen zwei Enden angeordnet wird und so platziert wird, dass er Kontakt mit beiden Schläuchen hat, wobei der Ringkörper (200) im Allgemeinen zylindrisch ist und einen Ringkanal durch sich hat, **dadurch gekennzeichnet, dass** der Ringkörper (200) eine Öffnung (211,212,213) umfasst, welche sich von einer Außenseite des Ringkörpers (200) zu einem Innenraum (221,222,223) erstreckt, worin ein antreibendes Teil (231,232,233) in diesem Raum (221,222,223) platziert ist, und wobei die Zusammenstellung so ist, dass im Einsatz bei Kompression des Ringkörpers (200) zwischen den zwei Schläuchen (132,134) die Öffnung (211,212,213) über den antreibenden Teilen schließt , um den Ringkörper (200) gegen die innere Wand des Kupplungskörpers (240) zu zwingen.

## Revendications

1. Procédé d'accouplement de deux éléments tubulaires dans un ensemble d'accouplement, dans lequel est fourni un ensemble d'accouplement, lequel comporte un corps d'accouplement (240) de configuration généralement cylindrique, doté d'un canal le traversant, chaque extrémité du corps d'accouplement présentant un taraudage (242, 244)) en vue d'un ajustement fileté avec un élément tubulaire de telle sorte que l'ensemble d'accouplement puisse fournir un raccordement entre deux éléments tubulaires (132, 134), dans lequel un anneau de protection comportant un corps d'anneau (200) constitué d'un matériau élastique est positionné de façon adjacente à une paroi intérieure dudit corps d'accouplement (240) entre les deux extrémités de celui-ci et placé pour se trouver au contact des deux dits éléments tubulaires, ledit corps d'anneau (200) étant généralement cylindrique et présentant à travers lui un canal annulaire, le procédé comprenant les étapes comportant d'engager par filetage chaque élément tubulaire avec le corps d'accouplement de l'ensemble d'accouplement, **caractérisé en ce que** le corps d'anneau (200) comprend une ouverture (211, 212, 213) s'étendant de l'extérieur du corps d'anneau (200) jusqu'à un espace intérieur (221, 222, 223), dans lequel un élément d'activation (231, 232, 233) est placé à l'intérieur de cet espace (221, 222, 223), le procédé comprenant, de plus, l'étape consistant à assembler par filetage les deux éléments tubulaires en ledit ensemble d'accouplement de sorte que le corps d'anneau (200) est comprimé entre les extrémités desdits deux éléments tubulaires fermant l'ouverture (211, 212, 213) dans le corps d'anneau (200) autour de l'élément d'activation (231, 232, 233) poussant le corps d'anneau (200) contre la paroi intérieure du corps d'accouplement (240).

2. Procédé selon la revendication 1 dans lequel, sous l'effet d'une compression entre les deux dits éléments tubulaires, ladite ouverture (211, 212, 213) commence à se fermer facilitant une variation de la forme dudit corps d'anneau (200) sans une variation de son volume.

3. Procédé selon la revendication 1 ou 2 dans lequel ladite ouverture (211, 212, 213) est d'une dimension suffisante pour que, sous l'effet d'une compression entre les deux dits éléments tubulaires, ledit corps d'anneau soit empêché de présenter une expansion significative dans un parcours d'écoulement défini par ledit ensemble d'accouplement et les deux dits éléments tubulaires.

4. Ensemble d'accouplement à utiliser dans le procédé selon l'une quelconque des revendications 1 à 3, l'ensemble d'accouplement comportant un corps d'accouplement (240) de configuration généralement cylindrique doté d'un canal à travers lui, chaque extrémité dudit corps d'accouplement présentant un taraudage (242, 244) en vue d'un ajustement fileté avec un élément tubulaire de façon que l'ensemble d'accouplement puisse fournir un raccordement entre deux éléments tubulaires (132, 134), un anneau de protection comportant un corps d'anneau (200) constitué d'un matériau élastique en vue d'un positionnement de façon adjacente à une paroi intérieure dudit corps d'accouplement (240) entre ses deux extrémités et placé pour se trouver en contact avec les deux dits éléments tubulaires, ledit corps d'anneau (200) étant de configuration généralement cylindrique et présentant à travers lui un canal annulaire, **caractérisé en ce que** ledit corps d'anneau (200) comporte une ouverture (211, 212, 213) s'étendant de l'extérieur du corps d'anneau (200) jusqu'à un espace intérieur (221, 222, 223), dans lequel un élément d'activation (231, 232, 233) est placé à l'intérieur de cet espace (221, 222, 223), l'agencement étant tel que, lorsqu'il est utilisé, lors de la compression dudit corps d'anneau (200) entre les deux dits éléments tubulaires (132, 134), l'ouverture (211, 212, 213) se ferme autour dudit élément d'activation pour pousser ledit corps d'anneau (200) contre ladite paroi intérieure dudit corps d'accouplement (240) de façon qu'un matériau corrosif soit empêché d'entrer en contact avec lui.

5. Ensemble d'accouplement selon la revendication 4, dans lequel ledit élément d'activation (231, 232, 233) s'étend autour dudit corps d'anneau (200) et est essentiellement coaxial avec lui, de sorte que ledit corps d'anneau (200) est empêché de former un arc vers l'intérieur pendant la compression entre les deux dits éléments tubulaires.

6. Ensemble d'accouplement selon la revendication 4 ou 5 comprenant, de plus, une pluralité d'éléments d'activation (231, 232, 233).

7. Ensemble d'accouplement selon la revendication 4, 5 ou 6 comprenant, de plus, une pluralité d'ouvertures (211, 212, 213), chaque ouverture correspondant à un élément d'activation respectif (231, 232, 233).

8. Ensemble d'accouplement selon la revendication 7, dans lequel au moins l'une de ladite pluralité d'ouvertures (211, 212, 213) se trouve sur l'extérieur dudit corps d'anneau et au moins l'une de ladite pluralité d'ouvertures (211, 212, 213) se trouve sur l'intérieur dudit corps d'anneau (200).

9. Ensemble d'accouplement selon l'une quelconque des revendications 4 à 8, dans lequel ladite ouverture (211, 212, 213) est dimensionnée de façon à s'accommoder à des tolérances de longueur de fabrication des deux dits éléments tubulaires lorsque ledit anneau de protection est comprimé entre eux.

10. Ensemble d'accouplement selon l'une quelconque des revendications 4 à 9, dans lequel ledit corps d'anneau (200) comporte un bord en saillie conçu pour être pris entre ladite paroi intérieure dudit élément d'accouplement et une partie de forme conique de l'un des deux dits éléments tubulaires.

11. Ensemble d'accouplement selon l'une quelconque des revendications 4 à 10, dans lequel au moins un élément d'activation (231, 232, 233) comprend au moins l'un : d'un matériau élastomère élastique ; et d'un matériau anticorrosion compressible.

12. Ensemble d'accouplement selon l'une quelconque des revendications 4 à 11, dans lequel l'anneau de protection comporte au moins une surface concave (206) s'étendant autour d'au moins une partie de la circonférence dudit corps d'anneau (200).

13. Anneau de protection destiné à l'ensemble d'accouplement selon l'une quelconque des revendications 4 à 14, l'anneau de protection comprenant un corps d'anneau (200) pour être positionné de façon adjacente à une paroi intérieure d'un corps d'accouplement (240) constitué de matériau élastique entre ses deux extrémités et placé pour se trouver en contact avec les deux éléments tubulaires, ledit corps d'anneau (200) étant généralement cylindrique et présentant à travers lui un canal annulaire ;
**caractérisé en ce que** ledit corps d'anneau (200) comporte une ouverture (211, 212, 213) s'étendant de l'extérieur du corps d'anneau (200) jusqu'à un espace intérieur (221, 222, 223) dans lequel un élément d'activation (231, 232, 233) est situé à l'intérieur de cet espace (221, 222, 223), l'agencement étant tel que, lors de la compression de l'anneau de protection entre les deux dits éléments tubulaires, l'ouverture (211, 212, 213) se ferme autour de l'élément d'activation (231, 232, 233) pressant le corps d'anneau (200) contre la paroi intérieure du corps d'accouplement (240).
